(19) Europäisches Patentamt
European Patent Office
Office européen des brevets

(11)  **EP 2 169 422 B1**

(12)  **EUROPEAN PATENT SPECIFICATION**

(45) Date of publication and mention
of the grant of the patent:
**11.09.2019  Bulletin 2019/37**

(51) Int Cl.:
***G01S 5/22*** *(2006.01)*

(21) Application number: **08425626.2**

(22) Date of filing: **24.09.2008**

(54) **System and method for acoustic tracking an underwater vehicle trajectory**

System und Verfahren zur akustischen Verfolgung der Bahn eines Unterwasserfahrzeugs

Système et procédé de suivi acoustique d'une trajectoire de véhicule sous-marin

(84) Designated Contracting States:
**DE FR GB IT**

(43) Date of publication of application:
**31.03.2010  Bulletin 2010/13**

(73) Proprietor: **LEONARDO S.p.A.**
**00195 Roma (IT)**

(72) Inventor: **Cossu, Elisabetta**
**57126 Livorno (IT)**

(74) Representative: **Bergadano, Mirko et al**
**Studio Torta S.p.A.**
**Via Viotti, 9**
**10121 Torino (IT)**

(56) References cited:
**US-A- 3 764 964    US-A- 4 187 491**
**US-A- 4 480 322    US-A- 5 095 467**
**US-A- 5 377 162**

## Description

The present invention relates to a system and method for acoustic tracking the trajectory of a moving underwater vehicle, in particular a torpedo.

As is known, both in the military and civilian field, test areas (or test ranges) are used to test underwater vehicles, such as torpedoes. A network of electroacoustic sensors (e.g. hydrophones) is normally set up in the test area to detect and follow (operation known as "tracking") the trajectory of the underwater vehicle. The trajectory tracking allows, for example, recovery of the underwater vehicle after testing and/or analysis of the vehicle performance and behavior during testing.

As it moves in the test area, the underwater vehicle to be tracked emits underwater acoustic signals, in particular a train of periodic pulses, which are detected by the electroacoustic sensors; the electroacoustic sensors transmit the detected information to a processing unit, e.g. on board a naval support vessel, for processing to analyse and track the trajectory of the underwater vehicle.

Known acoustic tracking systems are based on the principle of synchronous acoustic transmission. In particular, the transmission time base of the acoustic signals generated by the underwater vehicle to be tracked and the receiving time base of the signals by the electroacoustic sensors in the sensor network are first correlated by synchronizing the respective clocks of the underwater vehicle and the processing unit controlling the electroacoustic sensor network. In a system of this sort, both the receiving times of the acoustic signals by the electroacoustic sensors and the transmission times by the underwater vehicle are therefore known.

The trajectory of the underwater vehicle is then reconstructed using both the transmission and receiving time bases, and more specifically by calculating how long the acoustic signals take to travel the distance between the transmitting underwater vehicle and the receiving electroacoustic sensors. Given the speed of sound in water, this calculation enables calculation of the distance between the underwater vehicle and the sensors. Using at least three electroacoustic sensors, the measured distances provide, by suitable triangulation, for determining the instantaneous position, and so tracking the trajectory of, the underwater vehicle.

The above synchronizing step calls for data exchange between the underwater vehicle and the processing unit before the underwater vehicle enters the water and by means of dedicated signals and equipment. Synchronization may be performed using cables or even a radio transmission in the case of an underwater vehicle at a remote distance from the processing unit on board the naval support vessel.

Such complex synchronization therefore clearly involves considerable expenditure in terms of time and resources.

US-A-4 480 322 discloses a range measurement system used by a submarine to determine the distance of a noise source; the submarine is also provided with a passive monitoring system with a beam forming circuit, one beam of which may be selected by a tracking computer. Two assemblies of three aligned hydrophones are located respectively on the port side and on the starboard side of the submarine. The signals supplied by these aligned receivers are correlated with a beam signal of the passive monitoring system selected supplying the delays of these signals. A computer receiving these delay values (i.e. arrival time differences) supplies to the tracking computer the values of the bearing angle $\alpha$ and the distance D of the noise source.

US-A-5 377 162 discloses an underwater object passive tracking process and system, envisaging use of at least three pairs of sensors, the sensors of each pair being aligned with respect to a presumed trajectory of the underwater object. Doppler effect is used to determine the speed of the underwater object and then, by integration, an estimated position is determined.

It is an object of the present invention to provide an acoustic tracking system and method designed to overcome all or some of the above drawbacks, and which in particular do not call for synchronizing the clocks of the underwater vehicle and the processing unit controlling the electroacoustic sensor network.

According to the present invention, there are provided an underwater vehicle acoustic tracking system and method, as claimed in claims 1 and 6 respectively.

A number of non-limiting embodiments of the present invention will be described by way of example with reference to the accompanying drawings, in which:

Figure 1 shows, schematically, one embodiment of an underwater vehicle tracking system in accordance with the present invention;
Figure 2 shows a plot relating to tracking operations in the Figure 1 system;
Figure 3 shows a flow chart relating to tracking operations in the Figure 1 system;
Figure 4 shows a block diagram of a preprocessing module of the Figure 1 system;
Figure 5 shows a block diagram of a predictive filtering module of the Figure 1 system;
Figure 6 shows the electroacoustic sensor arrangement in one embodiment of the tracking system.

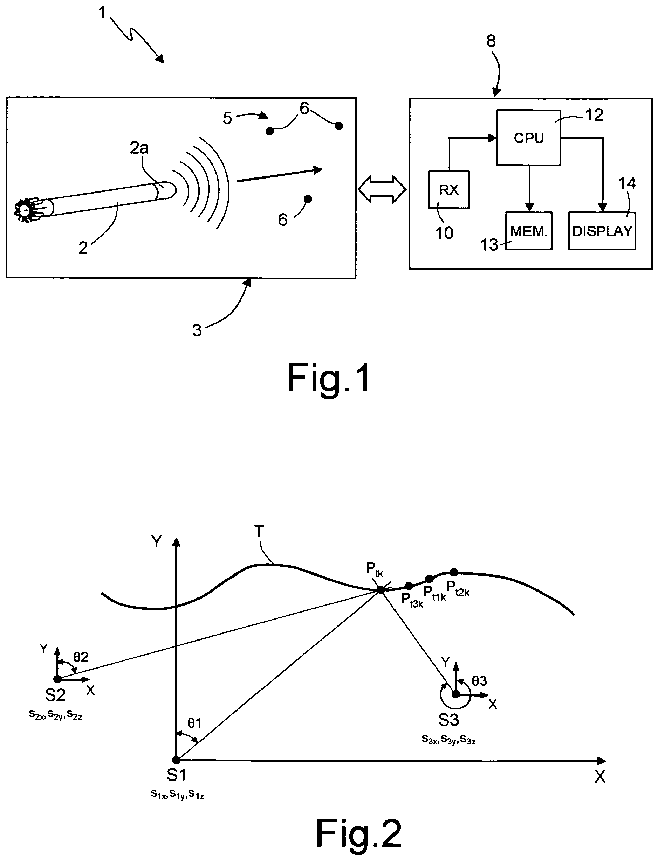

Figure 1 shows an acoustic tracking system 1 for detecting and tracking the position of a moving underwater vehicle 2 (e.g. a torpedo) in a test area 3 (shown schematically), e.g. an area for qualifying and sea testing underwater vehicle 2.

Tracking system 1 comprises an arrangement 5 of electroacoustic sensors 6 (e.g. hydrophones) distributed within test area 3. Electroacoustic sensors 6 are at least three in number, and are provided with receiving means for receiving dedicated, coded acoustic signals generated by a transmitting unit of underwater vehicle 2 (e.g. fitted to the underwater vehicle acoustic head 2a).

Tracking system 1 also comprises a processing unit 8, e.g. located remotely with respect to test area 3 and electroacoustic sensors 6, on board a naval support vessel (not shown), and operatively coupled to the electroacoustic sensors 6 (e.g. by a suitable radio link, of a known type). Processing unit 8 receives detection signals picked up by the electroacoustic sensors 6, and determines, in particular, information relative to the receiving times by the electroacoustic sensors 6 of the acoustic signals from underwater vehicle 2. Processing unit 8 is provided with hardware circuits (e.g. a CPU - Central Processing Unit) and/or software modules implementing appropriate algorithms for processing the received detection signals to determine, analyse and track the position of the underwater vehicle 2 in the test area 3.

More specifically, processing unit 8 comprises: a data receiving module 10 which receives the detection signals from the electroacoustic sensors 6; a computing module 12 for processing the detection signals to track the underwater vehicle 2; a memory 13 for storing data related to the tracking operations; and a display module 14 operable for user display of tracking data and, in particular, for displaying (in real-time or subsequently) a trajectory of the underwater vehicle 2 in the test area 3, e.g. a vehicle trajectory in a horizontal xy plane (using a so-called "NED" reference system, in which the x axis indicates north, the y axis east, and the z axis the "down" direction).

One particular aspect of the present invention is to eliminate the complex synchronization of the time bases of the acoustic signals transmitted by the underwater vehicle 2 and the detection signals generated by the electroacoustic sensors 6. Accordingly, the tracking system 1 does not require knowledge of the transmission times of the acoustic signals by the underwater vehicle 2 (tracking is performed in so-called asynchronous mode).

Figure 2 shows a horizontal (xy plane) projection of the trajectory T of the underwater vehicle 2, which, at time $t_k$ (k = 1, 2, 3, ... i, ...) is located at point $P_{tk}$ at coordinates $(x_{tk}, y_{tk}, z_{tk})$. Three sensors S1, S2, S3 are shown in test area 3 at known coordinates $(s_{1x}, s_{1y}, s_{1z})$, $(s_{2x}, s_{2y}, S_{2z})$ and $(s_{3x}, s_{3y}, S_{3z})$ in cartesian space. The origin of the cartesian space is assumed to be located at the position of the first sensor S1. An acoustic signal emitted by the underwater vehicle 2 at transmission time $t_k$ (unknown) is received by sensors S1, S2, S3 at respective receiving times $t_{1k}, t_{2k}, t_{3k}$ (or, in general, $t_{ik}$). The position of underwater vehicle 2 at the above receiving times is indicated $P_{t1k}$, $P_{t2k}$ and $P_{t3k}$ respectively.

The tracking method implemented by the processing unit 8 is based on measuring the difference between the receiving times of the acoustic signals by the electroacoustic sensors 6 (so-called "Time Difference of Arrival - TDOA"). More specifically, the position of the underwater vehicle 2 to be tracked (with respect to the position of the electroacoustic sensors 6) is obtained by measuring at least two TDOAs, i.e. using at least three electroacoustic sensors 6.

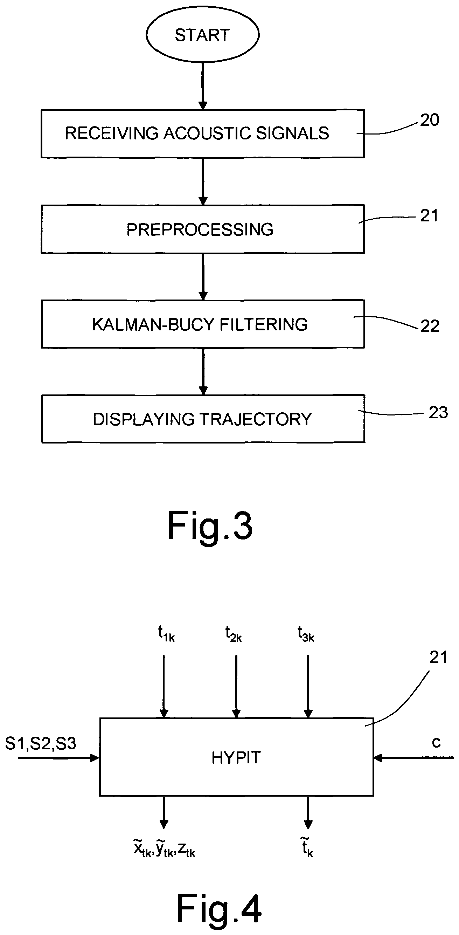

The above method (Figure 3) envisages a first step 20, in which the acoustic signals are received by the electroacoustic sensors 6 and the generated detection signals are transmitted to the processing unit 8.

Processing unit 8 (step 21) preprocesses the detection signals and, by means of a hyperbolic iteration algorithm (HYPIT), makes a first approximate noise-affected estimate of the cartesian coordinates of underwater vehicle 2, and of the time $t_k$ the acoustic signal was transmitted by the underwater vehicle 2.

Next (step 22), the estimated values are processed, using an algorithm employing a predictive time-varying filter, in particular a pseudolinear Kalman-Bucy filter, to generate an accurate estimate of the position, speed and acceleration vector $P_{tk} = (x_{tk}, \dot{x}_{tk}, \ddot{x}_{tk}, y_{tk}, \dot{y}_{tk}, \ddot{y}_{tk}, z_{tk}, \dot{z}_{tk}, \ddot{z}_{tk})^T$ of the underwater vehicle 2 along the three cartesian axes, and of the transmission time $t_k$.

The time plot of the position of the underwater vehicle 2 is then displayed to the user by the display module 14 of the processing unit 8 and stored in memory 13 (step 23).

More specifically (Figure 4), the hyperbolic iteration algorithm (HYPIT) receives at its input: the known coordinates of the three sensors S1, S2, S3; the receiving times $t_{1k}, t_{2k}, t_{3k}$ the acoustic signal generated by the underwater vehicle 2 at time $t_k$ is received by sensors S1, S2, S3; and the speed of sound c in the medium through which underwater vehicle 2 is travelling (in particular, the profile of the speed of sound in water as a function of depth); and generates at its output an approximate estimate of the coordinates $(\tilde{x}_{tk}, \tilde{y}_{tk}, z_{tk})$, of underwater vehicle 2 at time $t_k$ and of transmission time $\tilde{t}_k$. In this connection, it should be pointed out that no estimate is made of coordinate $z_{tk}$, since it corresponds to the depth determined (in known manner) and transmitted by the underwater vehicle 2.

With reference to the Figure 2 graph, by simply applying Pythagoras' theorem, the following hyperbolic system of equations can be obtained as a function of the position of underwater vehicle 2 in the horizontal plane $(x_{tk}, y_{tk})$ and of the speed of sound in water c :

$$(t_{1k}-t_k)=c^{-1}\cdot\left\{(x_{tk}-s_{1x})^2+(y_{tk}-s_{1y})^2\right\}^{1/2}$$

$$(t_{2k}-t_k)=c^{-1}\cdot\left\{(x_{tk}-s_{2x})^2+(y_{tk}-s_{2y})^2\right\}^{1/2}$$

$$(t_{3k}-t_k)=c^{-1}\cdot\left\{(x_{tk}-s_{3x})^2+(y_{tk}-s_{3y})^2\right\}^{1/2}$$

By subtracting the first equation member by member from the second equation, and the first equation from the third equation, two new equations are obtained in which the unknown parameter $t_k$ no longer appears.

$$c\cdot(t_{2k}-t_{1k})=\left\{(x_{tk}-s_{2x})^2+(y_{tk}-s_{2y})^2\right\}^{1/2}-\left\{(x_{tk}-s_{1x})^2+(y_{tk}-s_{1y})^2\right\}^{1/2}$$

$$c\cdot(t_{3k}-t_{1k})=\left\{(x_{tk}-s_{3x})^2+(y_{tk}-s_{3y})^2\right\}^{1/2}-\left\{(x_{tk}-s_{1x})^2+(y_{tk}-s_{1y})^2\right\}^{1/2}$$

The above hyperbolic system is recursively resolved by determining, by successive substitutions, the coordinates of underwater vehicle 2 in the horizontal plane ($x_{tk}$, $y_{tk}$) as a function of the known terms and expressions ($t_{3k}$-$t_{1k}$), ($t_{2k}$-$t_{1k}$), c, $S_{1x}$, $s_{1y}$, $S_{2x}$, $s_{2y}$, $s_{3x}$, $s_{3y}$. More specifically, by simple algebraic steps, the above two equations may be rewritten as follows (for convenience sake, the system is shown in matrix form):

$$\begin{bmatrix}\tilde{x}\\\tilde{y}\end{bmatrix}_{k,n+1}=\begin{bmatrix}s_{2y}-s_{1y} & -(s_{3y}-s_{1y})\\-(s_{x2}-s_{1x}) & s_{3x}-s_{1x}\end{bmatrix}\cdot\left\{(s_{3x}-s_{1x})(s_{2y}-s_{1y})-(s_{2x}-s_{1x})(s_{3y}-s_{1y})\right\}^{-1}\cdot$$

$$\cdot\begin{bmatrix}0{,}5\cdot\left\{s_{3x}^2-s_{1x}^2+s_{3y}^2-s_{1y}^2-m_{31}^2\right\}-m_{31}\cdot r_{k,n}\\0{,}5\cdot\left\{s_{2x}^2-s_{1x}^2+s_{2y}^2-s_{1y}^2-m_{21}^2\right\}-m_{21}\cdot r_{k,n}\end{bmatrix}$$

where :

$$m_{31}=c\cdot(t_{3k}-t_{1k});\ m_{21}=c\cdot(t_{2k}-t_{1k})$$

$$r_{k,n}=\sqrt{(\tilde{x}_{k,n}-s_{1x})^2+(\tilde{y}_{k,n}-s_{1y})^2}$$

The above expression shows the recursive nature and one-step memory of the algorithm, which calculates the new position from that of the preceding time, which is memorized and reused at each iteration. Though the algorithm needs an initial value, its convergence rate can be shown not to depend on the accuracy of the initial value. The coordinates of the first electroacoustic sensor S1, for example, may be assumed as the initial position.

The outputs of the HYPIT algorithm are then processed by a pseudolinear, time-varying Kalman-Bucy filter (PKBF) to estimate the state vector of the vehicle :
($x_k,\dot{x}_k,\ddot{x}_k,y_k,\dot{y}_k,\ddot{y}_k,z_k,\dot{z}_k,\ddot{z}_k$) the components of which are respectively the position, speed and acceleration of the underwater vehicle 2 along the cartesian axes x, y, z. A detailed description of the Kalman-Bucy filter can be found, for example, in: Bucy Richard S., Joseph Peter D, "Filtering for stochastic processes with applications to guidance", John Wiley & Sons, 1968; or Jazwinski Andrew H. "Stochastic processes and filtering theory", Academic Press, New York, 1970.

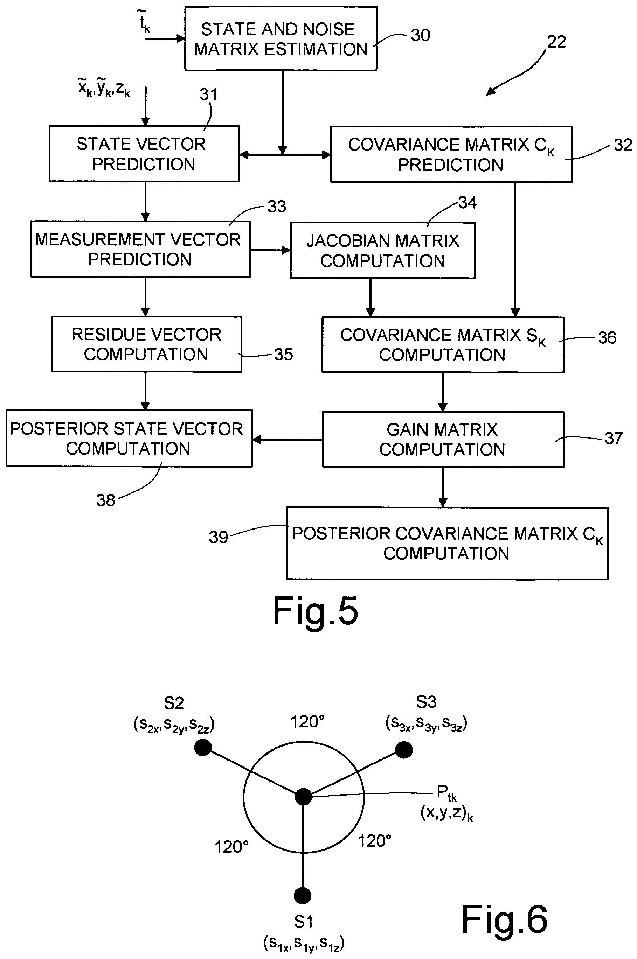

Briefly, and with reference to the Figure 5 flow chart, the PKBF filter receives the hyperbolic iteration algorithm outputs: the approximate coordinates ($\tilde{x}_{tk},\tilde{y}_{tk},z_{tk}$) of the underwater vehicle 2 at time $t_k$ and the approximate estimate of transmission time $\tilde{t}_k$.

For each time $t_k$, the PKBF filter calculates:

-   an estimate of the state-transition matrix $\tilde{F}(t_k)$ and noise matrix $\tilde{Q}(t_k)$ (block 30), where the state-transition matrix $F(t_k)$ is a diagonal 9x9 matrix of 3x3 blocks, each block given by :

$$F(t_k) = \begin{bmatrix} 1 & t_k & \dfrac{t_k^{\,2}}{2} \\ 0 & 1 & t_k \\ 0 & 0 & 1 \end{bmatrix},$$

and the noise matrix $Q(t_k)$ is given by :

$$Q(t_k) = q * \begin{bmatrix} A & 0 & 0 \\ 0 & A & 0 \\ 0 & 0 & A \end{bmatrix}$$

where q is a constant numeric factor calibrated at the simulation stage, and A is a 3x3 matrix :

$$A = \begin{bmatrix} \dfrac{t_k^{\,5}}{20} & \dfrac{t_k^{\,4}}{8} & \dfrac{t_k^{\,3}}{6} \\ \dfrac{t_k^{\,4}}{8} & \dfrac{t_k^{\,3}}{3} & \dfrac{t_k^{\,2}}{2} \\ \dfrac{t_k^{\,3}}{6} & \dfrac{t_k^{\,2}}{2} & t_k \end{bmatrix}$$

- a prediction of the state vector $\hat{x}_{k+1|k} = \tilde{F}(t_{k+1}) \cdot \hat{x}_{k|k}$ (block 31) and of the covariance matrix

$$C_{k+1|k} = \tilde{F}(t_{k+1}) \cdot C_{k|k} \cdot \tilde{F}^T(t_{k+1}) + \tilde{Q}(t_{k+1})$$

(block 32);
- the measurement vector $\hat{m}_k = h(x_{k|k-1}, \tilde{t}_k)$ (block 33) and the Jacobian matrix $H = \nabla h(\hat{x}_{k|k-1}, \tilde{t}_k)$ (block 34) given by:

$$H = \begin{bmatrix} 1 & 0 & 0 & 0 & 0 & 0 \\ 0 & 0 & 0 & 1 & 0 & 0 \end{bmatrix};$$

- the residue vector $s_k = \tilde{m}_k - \hat{m}_k$ (block 35) and relating covariance matrix $S_k = H \cdot C_{k|k-1} \cdot H^T + R_k$ (block 36), where R is the measurement noise matrix;
- the gain matrix $G_k = C_{k|k-1} \cdot H^T \cdot S_k^{-1}$ (block 37); and
- the posterior state vector $\hat{x}_{k|k} = \hat{x}_{k|k-1} + G_k \cdot s_k$ (block 38) and posterior covariance matrix $C_{k|k} = [1 - G_k \cdot H] \cdot [1 - G_k \cdot H]^T + G_k \cdot R_k \cdot G_k^T$ (block 39).

The components of the posterior state vector $\hat{x}_{k|k}$ respectively represent the position, speed and acceleration (along the cartesian axes x, y, z) as a function of time of the underwater vehicle 2 moving in the test area 3, and can be used to analyse and display the position-time pattern of the underwater vehicle 2 in the display module 14 of processing unit 8, and possibly store this pattern in memory 13.

The arrangement of electroacoustic sensors 6 that gives the most accurate position estimate of underwater vehicle 2 (i.e. the best convergence rate of the algorithms described) has been found to be positioning the sensors to form the tips of equilateral triangles, as shown schematically in Figure 6 (in which the underwater vehicle 2 is assumed to be in the centre). This equally spaced sensor arrangement, in fact, provides for maximizing information associated to time distances.

The distance between the sensors may range, for example, between 500 m and 2000 m, depending on environmental conditions and operating requirements; at least three sensors are used, whereas the maximum number depends on the area to be covered. Obviously, if more than three electroacoustic sensors 6 are used, these are arranged in multiple equilateral triangle formations.

The tracking system as described herein has obvious advantages.

In particular, by eliminating the preliminary synchronizing stage, the underwater vehicle can be launched from any launch platform within the test area, with no particular initial position restrictions. The tracking algorithm may advantageously be implemented on a processing unit on board a naval support vessel, and which controls operation of the electroacoustic sensors in the test area. The processed trajectory can be traced and displayed in real time by the processing unit display; and tracking data can be stored during testing for post-launch analysis.

The tracking system therefore provides for:

- real-time tracking the underwater vehicle trajectory to determine tactical and dynamic performances of the vehicle;
- real-time tracking the underwater vehicle trajectory to assist recovery thereof; and
- off-line analysis, and comparison of the underwater vehicle trajectory reconstructed by the processing unit with the trajectory reconstructed from data recorded during testing by the underwater vehicle acoustic head.

Clearly, changes may be made to the system and method as described and illustrated herein without, however, departing from the scope of the present invention as defined in the accompanying claims.

In particular, the number and arrangement of the electroacoustic sensors 6 in the test area 3 may obviously be other than as shown.

Furthermore, the processing unit performing the tracking operations may obviously be located in or outside the test area.

**Claims**

1. A system (1) for tracking the trajectory (T) of an underwater vehicle (2) moving in a monitoring area (3), comprising:

   - at least three separate sensors (6) located in known positions (S1, S2, S3) in said monitoring area (3) and configured to detect, at respective receiving times ($t_{ik}$), an acoustic signal transmitted by said underwater vehicle (2); and
   - a processing unit (8) operatively coupled to said sensors (6) and configured to determine said trajectory (T) as a function of said receiving times ($t_{ik}$);

   **characterized in that** said processing unit (8) is configured to:

   - implement a hyperbolic iterative algorithm based on differences between said receiving times ($t_{ik}$) and on said known positions (S1, S2, S3) of said sensors (6), to determine an approximate position ($\tilde{P}_{tk}$) of said underwater vehicle (2) and make an approximate estimate ($\tilde{t}_k$) of a transmission time of said acoustic signal by said underwater vehicle (2); and
   - process said approximate position ($\tilde{P}_{tk}$) and said approximate estimate ($\tilde{t}_k$) of a transmission time using a time-varying predictive filter, to estimate said position of said underwater vehicle (2) and derive said trajectory (T);

   wherein said hyperbolic iterative algorithm receives at its input at least three receiving times ($t_{1k}$, $t_{2k}$, $t_{3k}$) associated with the at least three separate sensors (6); and wherein said hyperbolic iterative algorithm comprises the iterative determination of the approximate position ($\tilde{P}_{tk}$) of the underwater vehicle through the use of the following equation:

$$
\begin{bmatrix} \tilde{x} \\ \tilde{y} \end{bmatrix}_{k,n+1} = \begin{bmatrix} s_{2y} - s_{1y} & -\left(s_{3y} - s_{1y}\right) \\ -\left(s_{x2} - s_{1x}\right) & s_{3x} - s_{1x} \end{bmatrix} \cdot \left\{\left(s_{3x} - s_{1x}\right)\left(s_{2y} - s_{1y}\right) - \left(s_{2x} - s_{1x}\right)\left(s_{3y} - s_{1y}\right)\right\}^{-1} \cdot
$$

$$
\cdot \begin{bmatrix} 0,5 \cdot \left\{s_{3x}{}^2 - s_{1x}{}^2 + s_{3y}{}^2 - s_{1y}{}^2 - m_{31}{}^2\right\} - m_{31} \cdot r_{k,n} \\ 0,5 \cdot \left\{s_{2x}{}^2 - s_{1x}{}^2 + s_{2y}{}^2 - s_{1y}{}^2 - m_{21}{}^2\right\} - m_{21} \cdot r_{k,n} \end{bmatrix}
$$

where:

$$m_{31} = c \cdot (t_{3k} - t_{1k}); \quad m_{21} = c \cdot (t_{2k} - t_{1k})$$

$$r_{k,n} = \sqrt{(\tilde{x}_{k,n} - s_{1x})^2 + (\tilde{y}_{k,n} - s_{1y})^2}$$

and where $t_{1k}$, $t_{2k}$, $t_{3k}$ are said receiving times; $S_{1x}$, $S_{2x}$, $S_{3x}$ and $s_{1y}$, $S_{2y}$, $S_{3y}$ are coordinates of said known positions (S1, S2, S3) in a plane (xy) of said trajectory; $\tilde{x}_{tk}, \tilde{y}_{tk}$ are coordinates of said approximate position ($\tilde{P}_{tk}$) in said plane; $t_k$ is said transmission time; and c is the speed of sound.

2. The system as claimed in claim 1, wherein said time-varying predictive filter is a Kalman filter configured to reduce a noise in the value of said approximate position ($\tilde{P}_{tk}$).

3. The system as claimed in claim 2, wherein said time-varying predictive filter is a pseudolinear Kalman-Bucy filter.

4. The system as claimed in any one of the foregoing claims, further comprising: a display unit (14) operatively coupled to said processing unit (8) and configured for real-time display of said trajectory (T); and a memory unit (13) operatively coupled to said processing unit (8) and configured to store data relating to said trajectory (T).

5. The system as claimed in any one of the foregoing claims, wherein said processing unit (8) is located remotely with respect to said monitoring area (3), has no radio connection to said underwater vehicle (2), and is configured to determine said trajectory (T) without knowing a transmission time ($t_k$) of said acoustic signal by said underwater vehicle (2).

6. A method of tracking the trajectory (T) of an underwater vehicle (2) moving in a monitoring area (3), the method comprising:

   - detecting an acoustic signal transmitted by said underwater vehicle (2), by at least three separate sensors (6) located in known positions (S1, S2, S3) in said monitoring area (3), and at respective receiving times ($t_{ik}$); and
   - determining said trajectory (T) as a function of said receiving times ($t_{ik}$);

   **characterized by** determining said trajectory comprising:

   - implementing a hyperbolic iterative algorithm based on differences between said receiving times ($t_{ik}$) and on said known positions (S1, S2, S3) of said sensors (6), to determine an approximate position ($\tilde{P}_{tk}$) of said underwater vehicle (2) and make an approximate estimate ($\tilde{t}_k$) of a transmission time of said acoustic signal by said underwater vehicle (2); and
   - processing said approximate position ($\tilde{P}_{tk}$) and said approximate estimate ($\tilde{t}_k$) of a transmission time using a time-varying predictive filter, to estimate said position of said underwater vehicle (2) and derive said trajectory (T);

   wherein said hyperbolic iterative algorithm receives at its input at least three receiving times ($t_{1k}$, $t_{2k}$, $t_{3k}$) associated with the at least three separate sensors (6); and wherein said hyperbolic iterative algorithm comprises the iterative determination of the approximate position ($\tilde{P}_{tk}$) of the underwater vehicle through the use of the following equation:

$$\begin{bmatrix} \tilde{x} \\ \tilde{y} \end{bmatrix}_{k,n+1} = \begin{bmatrix} s_{2y} - s_{1y} & -(s_{3y} - s_{1y}) \\ -(s_{x2} - s_{1x}) & s_{3x} - s_{1x} \end{bmatrix} \cdot \left\{ (s_{3x} - s_{1x})(s_{2y} - s_{1y}) - (s_{2x} - s_{1x})(s_{3y} - s_{1y}) \right\}^{-1} \cdot$$

$$\cdot \begin{bmatrix} 0{,}5 \cdot \{ s_{3x}^2 - s_{1x}^2 + s_{3y}^2 - s_{1y}^2 - m_{31}^2 \} - m_{31} \cdot r_{k,n} \\ 0{,}5 \cdot \{ s_{2x}^2 - s_{1x}^2 + s_{2y}^2 - s_{1y}^2 - m_{21}^2 \} - m_{21} \cdot r_{k,n} \end{bmatrix}$$

where:

$$m_{31} = c \cdot (t_{3k} - t_{1k}); \quad m_{21} = c \cdot (t_{2k} - t_{1k})$$

$$r_{k,n} = \sqrt{\left(\tilde{x}_{k,n} - s_{1x}\right)^2 + \left(\tilde{y}_{k,n} - s_{1y}\right)^2}$$

and where $t_{1k}$, $t_{2k}$, $t_{3k}$ are said receiving times; $S_{1x}$, $S_{2x}$, $S_{3x}$ and $s_{1y}$, $S_{2y}$, $S_{3y}$ are coordinates of said known positions (S1, S2, S3) in a plane (xy) of said trajectory; $\tilde{x}_{tk}$, $y_{tk}$ are coordinates of said approximate position ($\tilde{P}_{tk}$) in said plane; $t_k$ is said transmission time; and c is the speed of sound.

7. The method as claimed in claim 6, wherein processing said approximate position comprises reducing a noise in the value of said approximate position ($\tilde{P}_{tk}$) using a Kalman filter, in particular a pseudolinear Kalman-Bucy filter.

8. The method as claimed in any one of claims 6 to 7, wherein said trajectory is determined without knowing a transmission time ($t_k$) of said acoustic signal by said underwater vehicle (2).

9. A computer program product comprising computer instructions for implementing, when executed in a processing unit (8) of a tracking system (1) as claimed in any one of claims 1 to 5, the tracking method as claimed in any one of claims 6 to 8.

**Patentansprüche**

1. System (1) zum Verfolgen der Bewegungsbahn (T) eines Unterwasserfahrzeugs (2), das sich in einem Überwachungsbereich (3) bewegt, das Folgendes umfasst:

wenigstens drei separate Sensoren (6), die sich an bekannten Positionen (S1, S2, S3) in dem Überwachungsbereich (3) befinden und konfiguriert sind, zu entsprechenden Empfangszeiten ($t_{ik}$) ein akustisches Signal, das durch das Unterwasserfahrzeug (2) gesendet wird, zu empfangen; und
eine Verarbeitungseinheit (8), die mit den Sensoren (6) betriebstechnisch gekoppelt ist und konfiguriert ist, die Bewegungsbahn (T) als eine Funktion der Empfangszeiten ($t_{ik}$) zu bestimmen;
**dadurch gekennzeichnet, dass** die Verarbeitungseinheit (8) konfiguriert ist zum:

Implementieren eines hyperbolischen iterativen Algorithmus basierend auf Differenzen zwischen den Empfangszeiten ($t_{ik}$) und auf den bekannten Positionen (S1, S2, S2) der Sensoren (6), um eine ungefähre Position ($\tilde{P}_{tk}$) des Unterwasserfahrzeugs (2) zu bestimmen und eine ungefähre Schätzung ($\tilde{t}_{tk}$) einer Sendezeit des akustischen Signals durch das Unterwasserfahrzeug (2) vorzunehmen; und
Verarbeiten der ungefähren Position ($\tilde{P}_{tk}$) und der ungefähren Schätzung ($\tilde{t}_{tk}$) einer Sendezeit unter Verwendung eines zeitabhängigen prädiktiven Filters, um die Position des Unterwasserfahrzeugs (2) zu schätzen und die Bewegungsbahn (T) abzuleiten;

wobei der hyperbolische iterative Algorithmus an seiner Eingabe wenigstens drei Empfangszeiten ($t_{1k}$, $t_{2k}$, $t_{3k}$), die den wenigstens drei separaten Sensoren (6) zugeordnet sind, empfängt; und wobei der hyperbolische iterative Algorithmus die iterative Bestimmung der ungefähren Position ($\tilde{P}_{tk}$) des Unterwasserfahrzeugs durch die Verwendung der folgenden Gleichung umfasst:

$$\begin{bmatrix} \tilde{x} \\ \tilde{y} \end{bmatrix}_{k,n+1} = \begin{bmatrix} s_{2y} - s_{1y} & -\left(s_{3y} - s_{1y}\right) \\ -\left(s_{x2} - s_{1x}\right) & s_{3x} - s_{1x} \end{bmatrix} \cdot \left\{ \left(s_{3x} - s_{1x}\right)\left(s_{2y} - s_{1y}\right) - \left(s_{x2} - s_{1x}\right)\left(s_{3y} - s_{1y}\right) \right\}^{-1}$$

$$\cdot \begin{bmatrix} 0{,}5 \cdot \left\{ s_{3x}^2 - s_{1x}^2 + s_{3y}^2 - s_{1y}^2 - m_{31}^2 \right\} - m_{31} \cdot r_{k,n} \\ 0{,}5 \cdot \left\{ s_{2x}^2 - s_{1x}^2 + s_{1y}^2 - s_{1y}^2 - m_{21}^2 \right\} - m_{21} \cdot r_{k,n} \end{bmatrix}$$

mit:

$$m_{31} = c \cdot \left( t_{3k} - t_{1k} \right); m_{21} = c \cdot \left( t_{2k} - t_{1k} \right)$$

$$r_{k,n} = \sqrt{\left( \tilde{x}_{k,n} - s_{1x} \right)^2 + \left( \tilde{y}_{k,n} - s_{1y} \right)^2}$$

und wobei $t_{1k}$, $t_{2k}$, $t_{3k}$ die Empfangszeiten sind; $s_{1x}$, $s_{2x}$, $s_{3x}$ und $s_{1y}$, $s_{2y}$, $s_{3y}$ Koordinaten der bekannten Positionen (S1, S2, S3) in einer Ebene (xy) der Bewegungsbahn sind; $\tilde{x}_{tk}$, $\tilde{y}_{tk}$ Koordinaten der ungefähren Position ($\tilde{P}_{tk}$) in der Ebene sind; *tk* die Sendezeit ist; und c die Schallgeschwindigkeit ist.

2.  System nach Anspruch 1, wobei das zeitabhängige prädiktive Filter ein Kalman-Filter ist, das konfiguriert ist, ein Rauschen in dem Wert der ungefähren Position ($\tilde{P}_{tk}$) zu reduzieren.

3.  System nach Anspruch 2, wobei das zeitabhängige prädiktive Filter ein pseudolineares Kalman-Bucy-Filter ist.

4.  System nach einem der vorstehenden Ansprüche, das ferner umfasst: eine Anzeigeeinheit (14), die mit der Verarbeitungseinheit (8) betriebstechnisch gekoppelt ist und zur Echtzeitanzeige der Bewegungsbahn (T) konfiguriert ist; und eine Speichereinheit (13), die mit der Verarbeitungseinheit (8) betriebstechnisch gekoppelt ist und konfiguriert ist, Daten, die sich auf die Bewegungsbahn (T) beziehen, zu speichern.

5.  System nach einem der vorstehenden Ansprüche, wobei die Verarbeitungseinheit (8) in Bezug auf den Überwachungsbereich (3) entfernt angeordnet ist, keine Funkverbindung zu dem Unterwasserfahrzeug (2) aufweist und konfiguriert ist, die Bewegungsbahn (T) ohne Kenntnis einer Sendezeit ($t_k$) des akustischen Signals durch das Unterwasserfahrzeug (2) zu bestimmen.

6.  Verfahren zum Verfolgen der Bewegungsbahn (T) eines Unterwasserfahrzeugs (2), das sich in einem Überwachungsbereich (3) bewegt, wobei das Verfahren umfasst:

    Detektieren eines akustischen Signals, das durch das Unterwasserfahrzeug (2) gesendet wird, durch wenigstens drei separate Sensoren (6), die sich an bekannten Positionen (S1, S2, S3) in dem Überwachungsbereich (3) befinden, und zu entsprechenden Empfangszeiten ($t_{ik}$); und
    Bestimmen der Bewegungsbahn (T) als eine Funktion der Empfangszeiten ($t_{ik}$);
    **gekennzeichnet durch** Bestimmen der Bewegungsbahn, das umfasst:

    Implementieren eines hyperbolischen iterativen Algorithmus basierend auf Differenzen zwischen den Empfangszeiten ($t_{ik}$) und auf den bekannten Positionen (S1, S2, S2) der Sensoren (6), um eine ungefähre Position ($\tilde{P}_{tk}$) des Unterwasserfahrzeugs (2) zu bestimmen und eine ungefähre Schätzung ($\tilde{t}_{tk}$) einer Sendezeit des akustischen Signals durch das Unterwasserfahrzeug (2) vorzunehmen; und
    Verarbeiten der ungefähren Position ($\tilde{P}_{tk}$) und der ungefähren Schätzung ($\tilde{t}_{tk}$) einer Sendezeit unter Verwendung eines zeitabhängigen prädiktiven Filters, um die Position des Unterwasserfahrzeugs (2) zu schätzen und die Bewegungsbahn (T) abzuleiten);

    wobei der hyperbolische iterative Algorithmus an seiner Eingabe wenigstens drei Empfangszeiten ($t_{1k}$, $t_{2k}$, $t_{3k}$), die den wenigstens drei separaten Sensoren (6) zugeordnet sind, empfängt; und wobei der hyperbolische iterative Algorithmus die iterative Bestimmung der ungefähren Position ($\tilde{P}_{tk}$) des Unterwasserfahrzeugs durch die Verwendung der folgenden Gleichung umfasst:

$$\begin{bmatrix} \tilde{x} \\ \tilde{y} \end{bmatrix}_{k,n+1} = \begin{bmatrix} s_{2y} - s_{1y} & -\left( s_{3y} - s_{1y} \right) \\ -\left( s_{x2} - s_{1x} \right) & s_{3x} - s_{1x} \end{bmatrix} \cdot \left\{ \left( s_{3x} - s_{1x} \right)\left( s_{2y} - s_{1y} \right) - \left( s_{x2} - s_{1x} \right)\left( s_{3y} - s_{1y} \right) \right\}^{-1}$$

$$\cdot \begin{bmatrix} 0{,}5 \cdot \left\{ s_{3x}^2 - s_{1x}^2 + s_{3y}^2 - s_{1y}^2 - m_{31}^2 \right\} - m_{31} \cdot r_{k,n} \\ 0{,}5 \cdot \left\{ s_{2x}^2 - s_{1x}^2 + s_{1y}^2 - s_{1y}^2 - m_{21}^2 \right\} - m_{21} \cdot r_{k,n} \end{bmatrix}$$

mit:

$$m_{31} = c \cdot \left( t_{3k} - t_{1k} \right); m_{21} = c \cdot \left( t_{2k} - t_{1k} \right)$$

$$r_{k,n} = \sqrt{\left( \tilde{x}_{k,n} - s_{1x} \right)^2 + \left( \tilde{y}_{k,n} - s_{1y} \right)^2}$$

und wobei $t_{1k}$, $t_{2k}$, $t_{3k}$ die Empfangszeiten sind; $s_{1x}$, $s_{2x}$, $s_{3x}$ und $s_{1y}$, $s_{2y}$, $s_{3y}$ Koordinaten der bekannten Positionen (S1, S2, S3) in einer Ebene (xy) der Bewegungsbahn sind; $\tilde{x}_{tk}$, $\tilde{y}_{tk}$ Koordinaten der ungefähren Position ($\tilde{P}_{tk}$) in der Ebene sind; $tk$ die Sendezeit ist; und c die Schallgeschwindigkeit ist.

7. Verfahren nach Anspruch 6, wobei das Verarbeiten der ungefähren Position Reduzieren eines Rauschens in dem Wert der ungefähren Position ($\tilde{P}_{tk}$) unter Verwendung eines Kalman-Filters, insbesondere eines pseudolinearen Kalman-Bucy-Filters, umfasst.

8. Verfahren nach einem der Ansprüche 6 bis 7,wobei die Bewegungsbahn ohne Kenntnis einer Sendezeit ($t_k$) des akustischen Signals durch das Unterwasserfahrzeug (2) bestimmt wird.

9. Computerprogrammprodukt, das Computeranweisungen zum Implementieren, wenn sie durch eine Verarbeitungseinheit (8) eines Verfolgungssystems (1) nach einem der Ansprüche 1 bis 5 ausgeführt werden, des Verfolgungsverfahrens nach einem der Ansprüche 6 bis 8 umfasst.

**Revendications**

1. Système (1) pour suivre la trajectoire (T) d'un véhicule sous-marin (2) se déplaçant dans une zone de surveillance (3), comprenant :

   - au moins trois capteurs (6) séparés situés à des positions (S1, S2, S3) connues dans ladite zone de surveillance (3) et configurés pour détecter, à des temps de réception ($t_{ik}$) respectifs, un signal acoustique émis par ledit véhicule sous-marin (2) ; et
   - une unité de traitement (8) couplée de manière fonctionnelle auxdits capteurs (6) et configurée pour déterminer ladite trajectoire (T) en fonction desdits temps de réception ($t_{ik}$) ;

   **caractérisé en ce que** ladite unité de traitement (8) est configurée pour :

   - implémenter un algorithme itératif hyperbolique basé sur des différences entre lesdits temps de réception ($t_{ik}$) et sur lesdites positions (S1, S2, S3) connues desdits capteurs (6), pour déterminer une position approximative ($\tilde{P}_{tk}$) dudit véhicule sous-marin (2) et faire une estimation approximative ($\tilde{t}_k$) d'un temps d'émission dudit signal acoustique par ledit véhicule sous-marin (2) ; et
   - traiter ladite position approximative ($\tilde{P}_{tk}$) et ladite estimation approximative ($\tilde{t}_k$) d'un temps d'émission en utilisant un filtre prédictif variant avec le temps, pour estimer ladite position dudit véhicule sous-marin (2) et déduire ladite trajectoire (T) ;

   dans lequel ledit algorithme itératif hyperbolique reçoit au niveau de son entrée au moins trois temps de réception ($t_{1k}$, $t_{2k}$, $t_{3k}$) associés aux au moins trois capteurs (6) séparés; et dans lequel ledit algorithme itératif hyperbolique comprend la détermination itérative de la position approximative ($\tilde{P}_{tk}$) du véhicule sous-marin par l'utilisation de l'équation suivante :

$$\begin{bmatrix} \tilde{x} \\ \tilde{y} \end{bmatrix}_{k,n+1} = \begin{bmatrix} s_{2y} - s_{1y} & -\left( s_{3y} - s_{1y} \right) \\ -\left( s_{x2} - s_{1x} \right) & s_{3x} - s_{1x} \end{bmatrix} \cdot \left\{ \left( s_{3x} - s_{1x} \right)\left( s_{2y} - s_{1y} \right) - \left( s_{2x} - s_{1x} \right)\left( s_{3y} - s_{1y} \right) \right\}^{-1} \cdot$$

$$\cdot \begin{bmatrix} 0{,}5 \cdot \left\{ s_{3x}{}^2 - s_{1x}{}^2 + s_{3y}{}^2 - s_{1y}{}^2 - m_{31}{}^2 \right\} - m_{31} \cdot r_{k,n} \\ 0{,}5 \cdot \left\{ s_{2x}{}^2 - s_{1x}{}^2 + s_{2y}{}^2 - s_{1y}{}^2 - m_{21}{}^2 \right\} - m_{21} \cdot r_{k,n} \end{bmatrix}$$

où :

$$m_{31} = c \cdot \left(t_{3k} - t_{1k}\right) \; ; \; m_{21} = c \cdot \left(t_{2k} - t_{1k}\right)$$

$$r_{k,n} = \sqrt{\left(\tilde{x}_{k,n} - s_{1x}\right)^2 + \left(\tilde{y}_{k,n} - s_{1y}\right)^2}$$

et où $t_{1k}$, $t_{2k}$, $t_{3k}$ sont lesdits temps de réception ; $S_{1x}$, $S_{2x}$, $S_{3x}$ et $S_{1y}$, $S_{2y}$, $S_{3y}$ sont les coordonnées desdites positions (S1, S2, S3) connues dans un plan (xy) de ladite trajectoire; $\tilde{x}_{tk}$, $\tilde{y}_{tk}$ sont les coordonnées de ladite position approximative ($\tilde{P}_{tk}$) dans ledit plan ; $t_k$ est ledit temps d'émission ; et c est la vitesse du son.

2. Système selon la revendication 1, dans lequel ledit filtre prédictif variant avec le temps est un filtre de Kalman configuré pour réduire un bruit dans la valeur de ladite position approximative ($\tilde{P}_{tk}$).

3. Système selon la revendication 2, dans lequel ledit filtre prédictif variant avec le temps est un filtre de Kalman-Bucy pseudo-linéaire.

4. Système selon l'une quelconque des revendications précédentes, comprenant en outre : une unité d'affichage (14) couplée de manière fonctionnelle à ladite unité de traitement (8) et configurée pour afficher en temps réel ladite trajectoire (T) ; et une unité de mémoire (13) couplée de manière fonctionnelle à ladite unité de traitement (8) et configurée pour stocker des données relatives à ladite trajectoire (T).

5. Système selon l'une quelconque des revendications précédentes, dans lequel ladite unité de traitement (8) est située à distance par rapport à ladite zone de surveillance (3), n'a pas de connexion radio avec ledit véhicule sous-marin (2), et est configurée pour déterminer ladite trajectoire (T) sans connaître un temps d'émission ($t_k$) dudit signal acoustique par ledit véhicule sous-marin (2).

6. Procédé pour suivre la trajectoire (T) d'un véhicule sous-marin (2) se déplaçant dans une zone de surveillance (3), le procédé comprenant :

   - la détection d'un signal acoustique émis par ledit véhicule sous-marin (2), par au moins trois capteurs (6) séparés situés à des positions (S1, S2, S3) connues dans ladite zone de surveillance (3), et à des temps de réception ($t_{ik}$) respectifs ; et
   - la détermination de ladite trajectoire (T) en fonction desdits temps de réception ($t_{ik}$) ;

   **caractérisé en ce que** la détermination de ladite trajectoire comprend :

   - l'implémentation d'un algorithme itératif hyperbolique basé sur des différences entre lesdits temps de réception ($t_{ik}$) et sur lesdites positions (S1, S2, S3) connues desdits capteurs (6), pour déterminer une position approximative ($\tilde{P}_{tk}$) dudit véhicule sous-marin (2) et faire une estimation approximative ($\tilde{t}_k$) d'un temps d'émission dudit signal acoustique par ledit véhicule sous-marin (2) ; et
   - le traitement de ladite position approximative ($\tilde{P}_{tk}$) et de ladite estimation approximative ($\tilde{t}_k$) d'un temps d'émission en utilisant un filtre prédictif variant avec le temps, pour estimer ladite position dudit véhicule sous-marin (2) et déduire ladite trajectoire (T) ;

   dans lequel ledit algorithme itératif hyperbolique reçoit au niveau de son entrée au moins trois temps de réception ($t_{1k}$, $t_{2k}$, $t_{3k}$) associés aux au moins trois capteurs (6) séparés; et dans lequel ledit algorithme itératif hyperbolique comprend la détermination itérative de la position approximative ($\tilde{P}_{tk}$) du véhicule sous-marin par l'utilisation de l'équation suivante :

$$\begin{bmatrix} \tilde{x} \\ \tilde{y} \end{bmatrix}_{k,n+1} = \begin{bmatrix} s_{2y}-s_{1y} & -(s_{3y}-s_{1y}) \\ -(s_{x2}-s_{1x}) & s_{3x}-s_{1x} \end{bmatrix} \cdot \{(s_{3x}-s_{1x})(s_{2y}-s_{1y})-(s_{2x}-s_{1x})(s_{3y}-s_{1y})\}^{-1} \cdot$$

$$\cdot \begin{bmatrix} 0,5\cdot\{s_{3x}{}^2-s_{1x}{}^2+s_{3y}{}^2-s_{1y}{}^2-m_{31}{}^2\}-m_{31}\cdot r_{k,n} \\ 0,5\cdot\{s_{2x}{}^2-s_{1x}{}^2+s_{2y}{}^2-s_{1y}{}^2-m_{21}{}^2\}-m_{21}\cdot r_{k,n} \end{bmatrix}$$

où :

$$m_{31}=c\cdot(t_{3k}-t_{1k}) \;;\; m_{21}=c\cdot(t_{2k}-t_{1k})$$

$$r_{k,n}=\sqrt{(\tilde{x}_{k,n}-s_{1x})^2+(\tilde{y}_{k,n}-s_{1y})^2}$$

et où $t_{1k}$, $t_{2k}$, $t_{3k}$ sont lesdits temps de réception ; $S_{1x}$, $S_{2x}$, $S_{3x}$ et $S_{1y}$, $S_{2y}$, $S_{3y}$ sont les coordonnées desdites positions (S1, S2, S3) connues dans un plan (xy) de ladite trajectoire; $\tilde{x}_{tk}$, $\tilde{y}_{tk}$ sont les coordonnées de ladite position approximative ($\tilde{P}_{tk}$) dans ledit plan ; $t_k$ est ledit temps d'émission ; et c est la vitesse du son.

7. Procédé selon la revendication 6, dans lequel le traitement de ladite position approximative comprend la réduction d'un bruit dans la valeur de ladite position approximative ($\tilde{P}_{tk}$) en utilisant un filtre de Kalman, en particulier un filtre de Kalman-Bucy pseudo-linéaire.

8. Procédé selon l'une quelconque des revendications 6 à 7, dans lequel ladite trajectoire est déterminée sans connaître un temps d'émission ($t_k$) dudit signal acoustique par ledit véhicule sous-marin (2).

9. Produit de programme informatique comprenant des instructions informatiques pour implémenter, quand elles sont exécutées dans une unité de traitement (8) d'un système de suivi (1) selon l'une quelconque des revendications 1 à 5, le procédé de suivi selon l'une quelconque des revendications 6 à 8.

# Fig.1

# Fig.2

START

RECEIVING ACOUSTIC SIGNALS ——— 20

PREPROCESSING ——— 21

KALMAN-BUCY FILTERING ——— 22

DISPLAYING TRAJECTORY ——— 23

# Fig.3

$t_{1k}$        $t_{2k}$        $t_{3k}$

21

S1,S2,S3 →        HYPIT        ← c

$\tilde{x}_{tk}, \tilde{y}_{tk}, \tilde{z}_{tk}$        $\tilde{t}_k$

# Fig.4

$\tilde{t}_k$ →

```
STATE AND NOISE          ⟋30
MATRIX ESTIMATION
```

$\tilde{x}_k, \tilde{y}_k, z_k$ →

22

```
STATE VECTOR          31
PREDICTION
```

↔

```
COVARIANCE MATRIX $C_K$     32
PREDICTION
```

↓

```
MEASUREMENT VECTOR     33
PREDICTION
```
→
```
JACOBIAN MATRIX     34
COMPUTATION
```

↓                                    ↓

```
RESIDUE VECTOR
COMPUTATION          35
```

```
COVARIANCE MATRIX $S_K$     36
COMPUTATION
```

↓                                    ↓

```
POSTERIOR STATE VECTOR
COMPUTATION
```
←
```
GAIN MATRIX          37
COMPUTATION
```

38

↓

```
POSTERIOR COVARIANCE MATRIX $C_K$
39                COMPUTATION
```

## Fig.5

S2
$(s_{2x}, s_{2y}, s_{2z})$

120°

S3
$(s_{3x}, s_{3y}, s_{3z})$

$P_{tk}$
$(x,y,z)_k$

120°          120°

S1
$(s_{1x}, s_{1y}, s_{1z})$

## Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4480322 A

- US 5377162 A

**Non-patent literature cited in the description**

- **BUCY RICHARD S. ; JOSEPH PETER D.** Filtering for stochastic processes with applications to guidance. John Wiley & Sons, 1968

- **JAZWINSKI ANDREW H.** Stochastic processes and filtering theory. Academic Press, 1970